# EUROPÄISCHE PATENTSCHRIFT

(11) **EP 1 103 023 B1**
(45) Veröffentlichungstag und Bekanntmachung des Hinweises auf die Patenterteilung: **29.01.2003**
(21) Anmeldenummer: 00936607.1
(22) Anmeldetag: 06.04.2000
(51) Int. Cl.: G05D 1/00

(54) **SYSTEM ZUR AUTOMATISCHEN FOLGEFÜHRUNG, INSBESONDERE ZUR AUTOMATISCHEN STAUFOLGEFÜHRUNG, EINES KRAFTFAHRZEUGS**
SYSTEM FOR AUTOMATIC FOLLOWING-DISTANCE CONTROL IN A MOTOR VEHICLE, ESPECIALLY IN CONGESTED TRAFFIC
SYSTEME DE CONDUITE DE SUIVI AUTOMATIQUE, EN PARTICULIER DE CONDUITE DE SUIVI AUTOMATIQUE INTERVENANT EN CAS D'EMBOUTEILLAGE, D'UN VEHICULE AUTOMOBILE

(30) Priorität: 09.04.1999 DE 19916095
(43) Veröffentlichungstag der Anmeldung: 30.05.2001
(73) Patentinhaber: ROBERT BOSCH GMBH, 70442 Stuttgart (DE)
(72) Erfinder: LOHNER, Herbert, D-71292 Friolzheim (DE); DOMINKE, Peter, D-74321 Bietigheim-Bissingen (DE); CAO, Chi-Thuan, D-70825 Korntal-Münchingen (DE); LEIMBACH, Klaus-Dieter, D-71696 Möglingen (DE); HARTER, Werner, D-75428 Illingen (DE); HOMMEL, Mathias, D-70825 Korntal (DE)
(86) Internationale Anmeldenummer: DE0001097
(87) Internationale Veröffentlichungsnummer: WO00062139

(56) Entgegenhaltungen:
- EP-A- 0 354 562
- US-A- 4 887 223
- US-A- 5 179 441

## Beschreibung

### Stand der Technik

Die Erfindung betrifft ein System zur automatischen Folgeführung, insbesondere zur automatischen Staufolgeführung, eines Kraftfahrzeugs, welches
- eine elektronische Fahr-, Brems- und Lenkungssteuerung/Regelung,
- eine mit einer Videokamera und nachgeschalteter Bildauswertung ausgerüstete Umgebungsbilderfassungseinheit, die Signale erzeugt, die der elektronischen Fahr-, Brems- und Lenkungssteuerung wenigstens zur automatischen Führung längs einer markierten Fahrspur eingebbar sind, und/oder
- eine Umgebungserfassungseinheit, die aufgrund detektierter Reflexionen von ausgesandter elektromagnetischer Strahlung arbeitet, sowie
- eine Abstands- und Relativgeschwindigkeitserfassungseinheit aufweist, die einen Abstand und eine Relativgeschwindigkeit zu einem aufgrund der von der Umgebungsbilderfassungseinheit erzeugten Signale auswählbaren Führungsfahrzeug erfaßt und jeweils ein entsprechendes Abstands- und Relativgeschwindigkeitserfassungssignal erzeugt.

Ein ähnliches System ist im US-Patent 5 684 697 beschrieben. Bei dem bekannten System werden die von der Videokamera gelieferten Bildrahmen digitalisiert und von einem Computer verarbeitet, der die Lenkung, Beschleunigung, Verlangsamung und Bremsung des Fahrzeugs innerhalb bestimmter Kriterien automatisch steuert oder regelt. Die automatische Lenkung des Fahrzeugs beruht auf der Bilderfassung von streifenförmigen Fahrbahnmarkierungen, während die automatische Geschwindigkeitssteuerung- oder regelung auf der Erfassung des Orts eines Führungsfahrzeugs innerhalb der markierten Fahrspur beruht.

Dagegen verwendet ein weiteres, aus dem US-Patent 5 572 449 bekanntes System Geschwindigkeitssignale, die einerseits von dem zu steuernden Fahrzeug und andererseits von einem voranfahrenden Führungsfahrzeug erfaßt und über ein Kommunikationssystem ausgetauscht werden, um die Relativgeschwindigkeit zwischen den beiden Fahrzeugen zu ermitteln und Steuersignale zu erzeugen, die die Geschwindigkeit und damit eine sichere Folgedistanz des nachkommenden Fahrzeugs zum Führungsfahrzeug stabilisieren und außerdem die Lenkung so steuern, dass das nachkommende Fahrzeug dem voranfahrenden folgen kann. Nachteilig ist hier, dass alle in Kolonne fahrenden Fahrzeuge mit demselben System ausgerüstet sein müssen.

Ein weiteres aus dem US-Patent 5 245 422 bekanntes System verwendet ähnlich wie bei dem US-Patent 5 684 697 eine Videokamera und die von einem Bildprozessor verarbeiteten Bilder derselben, um die Fahrbahnmarkierungen der Straße sowie die Position des Fahrzeugs relativ dazu zu bestimmen. Das gemeinsame Eingreifen eines Fahrregelschalters und eines Lenkregelschalters werden erkannt und dazu benutzt, die Verarbeitung der Bilddaten und eine automatische Lenkung des Fahrzeugs zu initiieren. Die automatische Einhaltung eines gegebenen Abstands zu einem voranfahrendem Führungsfahrzeug ist in dem obigen US-Patent 5 245 422 dagegen nicht beschrieben.

In Stausituationen tritt häufig der Fall ein, dass in einer Kolonne ein Fahrzeug hinter dem anderen mit niedriger Geschwindigkeit, z. B. unter 20 km/h in derselben Fahrspur fährt. In solchen Situationen ist die Aufmerksamkeit des Fahrers hauptsächlich darauf gerichtet, einen bestimmten Abstand zum Vordermann einzuhalten, um bei plötzlichen Bremsmanövern einen ausreichenden Bremsweg zur Verfügung zu haben. Die Lenkung des Fahrzeugs macht bei solchen kleinen Geschwindigkeiten und stetigen Fahrzeugbewegungen allenfalls kleine Korrekturen an dem Lenkrad erforderlich. Diese Fahrsituationen führen, wenn sie über einen längeren Zeitraum andauern, häufig zu einer Ermüdung oder Ablenkung des Fahrers, da sie nur einen kleinen Teil seiner Aufmerksamkeit beanspruchen.

### Aufgaben und Vorteile der Erfindung

Es ist Aufgabe der Erfindung, ein System zur automatischen Folgeführung, insbesondere zur automatischen Staufolgeführung, eines Kraftfahrzeugs zu ermöglichen, welches den Fahrer in bestimmten Situationen, beispielsweise in Stausituationen, durch die Übernahme der Querführung und der Abstandsführung zu einem Führungsfahrzeug wirksam entlasten kann.

Voraussetzung für ein solches System zur automatischen Folgeführung, insbesondere zur automatischen Staufolgeführung, ist eine automatische Fahrsteuerung mit "Stop"- und "Go"-Funktion, die unter bestimmten Bedingungen Brems-, Gas- und Kupplungspedalbewegungen des Fahrers entbehrlich macht und die abhängig von bestimmten Situationen ein automatisches Halten, Wiederanfahren und Fahren bis zur eingestellten Grenzgeschwindigkeit unabhängig von Fahrereingriffen ermöglicht. Eine weitere Voraussetzung für die Funktion eines solchen Systems zur automatischen Folgeführung, insbesondere zur automatischen Staufolgeführung, ist eine automatische Lenkungssteuerung- oder regelung, die unabhängig von einer fahrerseitigen Betätigung des Lenkrads Lenkbewegungen und/oder Lenkmomente auf die gelenkten Räder ausüben kann. Eine weitere Voraussetzung des erfindungsgemäßen Systems zur automatischen Folgeführung, insbesondere zur automatischen Staufolgeführung, ist das Vorhandensein von Fahrspurmarkierungen und ein innerhalb der Fahrspurmarkierungen befindliches Führungsfahrzeug, das im Falle eines Staus langsam fährt. Das eigene Fahrzeug folgt dem Führungsfahrzeug, solange dieses innerhalb der Fahrspurmarkierungen und unterhalb einer Grenzgeschwindigkeit fährt. Fällt das Führungsfahrzeug weg, weil es z. B. die Fahrspur verläßt oder schneller fährt als die Grenzgeschwindigkeit, schaltet das System ab. Das gleiche gilt auch dann, wenn mit Hilfe der mit einer Videokamera und einer nachgeschalteten Bildauswertung ausgerüsteten Umgebungsbilderfassungseinheit die Fahrspur nicht mehr erkannt werden kann, z. B. wenn Fahrspurmarkierungen nicht mehr oder mehrdeutig vorhanden sind. Jede bevorstehende Abschaltung des automatischen Folgeführungssystems, insbesondere des automatischen Staufolgeführungssystems, wird dem Fahrer durch ein Warnsignal mitgeteilt.

Das erfindungsgemäße System zur automatischen Folgeführung, insbesondere zur automatischen Staufolgeführung, weist Auswahl- und Entscheidungsmittel auf, die aufgrund von durch einen Fahrer eingebbaren und/oder von einem Fahrer abhängigen Parametern und aufgrund von vom System automatisch ermittelten Bedingungen zum einen entscheiden, ob eine automatische Folgeführung ausführbar ist oder ob eine manuelle Fahr-, Brems- und Lenkungssteuerung/Regelung vom Fahrer auszuführen ist, ob nur eine automatische Führung längs einer markierten erkannten Fahrspur oder ob eine Folgeführung nach einem erkannten Führungsfahrzeug oder ob eine Kombination dieser automatischen Führungstypen auszuführen ist und die andererseits ebenfalls aufgrund von von einem Fahrer eingebbaren und/oder von einem Fahrer abhängigen Parametern und aufgrund von vom System automatisch ermittelten Bedingungen auswählen, welche der Parameter für die Entscheidung: automatische oder manuelle Folgeführung zugrundezulegen sind und die, wenn die automatische Folgeführung ausgeführt wird, die Regelparameter für die Fahr-, Brems- und Lenkungsregelung auswählen.

Bei dem erfindungsgemäßen System zur automatischen Folgeführung, insbesondere zur automatischen Staufolgeführung, sind folgende Einschaltbedingungen in Form von "UND"-Kriterien verwirklicht:
- Das System ist nur aktiv, wenn die automatische Fahrsteuerung/Regelung mit der "Stop"- und "Go"-Steuerung aktiv ist. Die automatische "Stop"- und "Go"-Steuerung verlangt eine Freigabe durch den Fahrer beim Wiederanfahren nach einem Halt.
- Die Fahrspurmarkierungen wurden zweifelsfrei von der Umgebungsbilderfassungseinheit erfaßt. D. h., die Fahrspurerkennung erkennt z. B. zwei unterbrochene Linien in einem Abstand von z. B. bis zu 12 m. Zusätzlich oder alternativ können auch ausreichend hochstehende Bordsteine, die z.B. mindestens 10 cm über die Fahrbahnoberfläche ragen, als Fahrspurbegrenzung über kurze Entfernungen erkannt werden.
- Das Führungsfahrzeug ist vorhanden und wurde von der Umgebungsbilderfassungseinheit zweifelsfrei erkannt.
- Die Geschwindigkeit des Führungsfahrzeugs ist kleiner als die Grenzgeschwindigkeit, d. h. z. B. kleiner als 20-30 km/h.

Weiterhin realisieren die erfindungsgemäßen Auswahl- und Entscheidungsmittel folgende Abschaltbedingungen als "ODER"-Kriterien:
- Wenn die Einschaltbedingungen nicht oder nicht mehr gegeben sind;
- wenn der Fahrer einen Lenkeingriff über ein gewisses Lenkmoment hinaus oder einen Fahrpedaleingriff, d. h. einen Eingriff am Brems-, Gas- und/oder Kupplungspedal vornimmt;
- wenn der Fahrer das System zur automatischen Folgeführung z. B. durch eine Schalterbetätigung abschaltet. In diesem Fall muß das System sofort abgeschaltet werden;
- wenn Fahrspurmarkierungen fehlen oder aussetzen oder nicht zweifelsfrei erkannt wurden oder wenn zwar die Fahrspurmarkierungen erkannt wurden, aber das Führungsfahrzeug fehlt. In diesem Fall wird nach Ausgabe eines Abschaltwarnsignals das Fahrzeug ohne Fahrereingriff bis zum Stillstand abgebremst und das System nach einer bestimmten Wartezeit, z. B. 1-2 s abgeschaltet. Der automatische Bremsvorgang wird durch jeden Fahreingriff, sei es an dem Lenkrad oder an einem Fahr- oder Bremspedal, oder auch durch Ausschalten der automatischen Fahrsteuerung abgebrochen;
- wenn die Grenzgeschwindigkeit erreicht ist. Dabei bleibt das System zunächst aktiv und das eigene Fahrzeug beschleunigt nicht über die Grenzgeschwindigkeit hinaus. Wenn dann das Führungsfahrzeug durch steigende Geschwindigkeit den Regelbereich des Systems verläßt, erfolgt eine Abschaltung nach einem vorangehenden Abschaltwarnsignal, da dann in Wirklichkeit kein Führungsfahrzeug mehr vorhanden ist.

Für alle Arten der Abschaltung gilt, dass der Fahrer jederzeit in der Lage sein muß, das Fahrzeug zu übernehmen. Gegebenenfalls kann mit dem Abschalten der automatischen Lenkungssteuerung/Regelung auch die automatische Fahrsteuerung/Regelung abgeschaltet werden.

Das erfindungsgemäße System zur automatischen Folgeführung, insbesondere zur automatischen Staufolgeführung, kann zur Erzeugung folgender Informations- und Warnsignale eingerichtet sein:
- Informationssignale können erzeugt werden, wenn
- eine unplausible Fahrweise des Führungsfahrzeugs innerhalb der erkannten Fahrspurmarkierung erfaßt wird, wie z. B. bei einem Ausweichmanöver des Führungsfahrzeugs oder bei Beginn eines Spurwechsels desselben.

Eine Abschaltwarnung kann vor jeder Systemabschaltung erzeugt werden.

Das erfindungsgemäße System zur automatischen Folgeführung, insbesondere zur automatischen Staufolgeführung, ermöglicht eine modulare und ausbaufähige hierarchisch organisierte Reglerstruktur, die eine Situationserkennung durch das System und/oder durch den Fahrer und eine situationsabhängige Entscheidung und Auswahl über die Steuer/Regelbetriebsart, d. h. manuelle oder automatische Steuerung, eine Auswahl der Art der Steuerung oder Regelung, d. h. eine Spurnachführung oder eine Nachführung hinter dem Führungsfahrzeug und eine Auswahl der Reglerparameter und der Sollwerte für die Regelung bietet.

Optionell ist auch eine Fahrertyperkennungseinheit vorgesehen, die eine fahreradaptive Anpassung des Systems herbeiführt. Der Fahrer hat in jedem Fall die höchste Priorität und kann das System jederzeit übersteuern, da er stets im Überwachungskreis vorhanden ist.

Die anspruchsgemäße Umgebungserfassungseinheit arbeitet vorzugsweise mit Radar- (Radio Detection and Ranging) und/oder Lidar- (Light Detection and Ranging) Strahlung.

Nachstehend wird eine bevorzugte Ausführungsform eines erfindungsgemäßen Systems zur automatischen Folgeführung eines Kraftfahrzeugs anhand der Zeichnung näher beschrieben. Hier wird die Erfindung insbesondere anhand einer automatischen Staufolgeführung verdeutlicht.

### Zeichnung

Figur 1 zeigt in Form eines Funktionsblockschaltbilds eine Übersicht über die Struktur des erfindungsgemäßen Systems; und
Figur 2 zeigt ebenfalls als Funktionsblockschaltbild eine Reglerstruktur des erfindungsgemäßen Systems, die nach Längs- und Querführungsfunktionen unterteilt ist.

### Ausführungsbeispiel

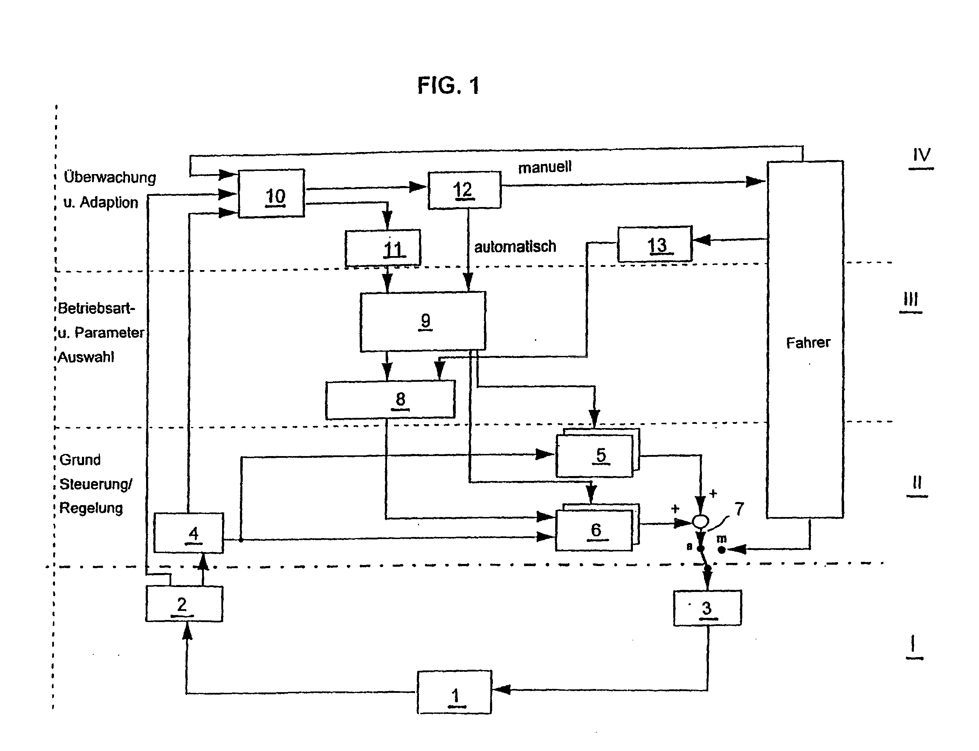

Wie das in Figur 1 abgebildete Funktionsblockschaltbild des erfindungsgemäßen Systems zur automatischen Staufolgeführung zeigt, ist die Reglerstruktur hierarchisch gegliedert. Die Hierarchieebenen sind in Figur 1 mit I, II, III und IV gekennzeichnet.

Die unterste Hierarchieebene I enthält das Kraftfahrzeug 1 mit den ihm zugeordneten Sensoren 2 und Stellgliedern 3. Die Sensoren 2 beinhalten insbesondere die Videokamera gegebenenfalls mit der nachgeschalteten Bildauswertung und den beispielsweise durch ein Radarsystem verwirklichten Abstandserfassungssensor sowie weitere im Fahrzeug vorhandene Sensoren, z. B. einen Sensor zur Ermittlung der Fahrzeug-Istgeschwindigkeit, einen Beschleunigungssensor, einen Steigungssensor, einen Querbeschleunigungssensor etc. Hierzu gehören auch Sensoren, die den am Lenkrad eingeschlagenen Lenkradwinkel sowie die durch die automatische Lenkungssteuerung/Regelung an den zu lenkenden Rädern eingestellten Ist-Lenkwinkel erfassen. Die hier erwähnten Sensoren sind nur beispielhaft. Entsprechende Signale können auch von anderen im Fahrzeug vorhandenen Steuergeräten geliefert werden.

Die Stellglieder 3 dienen zur Ansteuerung der Längs- und Querbewegung des Fahrzeugs unabhängig von der Antriebsart. Z. B. können Stellglieder zur Steuerung/Regelung der Brennkraftmaschine, wie deren Drehzahl, Drosselklappenwinkel, Einspritzmenge und/oder -intervalle, automatische/manuelle Bremsstellglieder sowie ein oder mehrere elektrische Stellmotoren zur Einstellung eines Lenkwinkels an den gelenkten Rädern unabhängig vom Lenkradwinkel vorgesehen sein.

Die nächste Hierarchieebene II stellt die Grundsteuerung/Regelung dar und umfaßt eine mit von den Sensoren 2 gelieferten Signalen beaufschlagte Zustandsschätzung 4, auswählbare Reglerarten bzw. Regelgesetze für Vorwärtsregelungen 5 sowie auswählbare Reglerarten bzw. Regelgesetze für rückkoppelnde Regelungen 6, wobei die ausgewählten Reglerarten-Regelgesetze über ein Summierglied zusammengefaßt werden, sowie einen Umschalter 7, der zwischen automatischer und manueller Ansteuerung der Stellglieder 3 umschaltet. Die Regelgesetze der Vorwärtsregelung 5 und die der rückkoppelnden Regelung 6 verwenden Ergebnisse der Zustandsschätzung 4 und die der Einheit 8 zur Anpassung der Reglerparameter und der Sollwerte und werden abhängig von Ergebnissen ausgewählt, die eine Regelbetriebsartauswähleinheit 9 betreffen. Die Einheiten 8 und 9 sind der nächsthöheren Hierarchiestufe III zugeordnet. In der zur Überwachung und Anpassung dienenden höchsten Hierarchiestufe IV analysiert eine Einheit 10 anhand des Ergebnisses der Zustandsschätzung 4 und anhand von Sensorsignalen von den Führungssensoren 2 sowie aus Fahrereingaben die Situation und erzeugt ein Analyseergebnis, welches in einer Entscheidungseinheit 12 verarbeitet wird und wesentlich dazu beiträgt, ob eine manuelle oder die automatische Steuerung oder Regelung für die Staufolgeführung ausgeführt wird. Ferner dient die durch die Einheit 10 analysierte Situation dazu, über eine Einheit 11 die Reglerbetriebsart mittels der Auswähleinheit 9 auszuwählen, insbesondere, ob eine Folgeführung nach einem voranfahrenden Führungsfahrzeug oder eine Führung nach der Fahrbahnmarkierung auszuführen sind.

Optionell umfaßt die höchste Hierarchiestufe IV eine adaptive Fahrertyperkennung, die die Sollwert- und Parameteranpassung 8 entsprechend einem erkannten Fahrertyp beaufschlagt. Eine solche adaptive Fahrertyperkennung kann auch durch entsprechende vom Fahrer selbst eingebbare Fahrtypinformationen ersetzt oder ergänzt werden.

Der Fahrer erhält also durch die direkte Beeinflussung der Situationsanalyse 10 sowie des Umschalters 7 jederzeit die Möglichkeit
- die automatische Staufolgeführung des Systems an die vorliegende Situation anzupassen oder abzuschalten und das Fahrzeug manuell zu führen. Dadurch, dass der Fahrer die Hierarchieebenen II-IV überlagert, hat er selbst die höchste Priorität und kann das System jederzeit übersteuern. Durch die vom Fahrerwunsch beeinflußbare und von den Sensorsignalen beaufschlagte Situationsanalyse 10 wird eine situationsabhängige Entscheidung über die Steuer/Regelbetriebsart "manuell" oder "automatisch", den Typ der Steuerung bzw. Regelung, z. B. die Führung anhand der erkannten Fahrbahnmarkierung oder die Führung anhand des erkannten Führungsfahrzeugs sowie über die Einheiten 8 und 9 die Auswahl der Parameter und Sollwerte (Einheiten 5 und 6) für die Steuerung/Regelung erreicht. Die optionell vorgesehene Fahrertyperkennung 13 ermöglicht eine fahreradaptive Anpassung, indem sie die Sollwert- und Parameteradaptionseinheit 8 beaufschlagt.

Das anhand des in Figur 1 dargestellten Funktionsblockschaltbilds erläuterte erfindungsgemäße System zur automatischen Staufolgeführung hat vorteilhafterweise eine hierarchische und ausbaufähige Struktur und arbeitet situations- und fahreradaptiv, wobei sich der Fahrer stets im Überwachungskreis befindet, die höchste Priorität hat und das System jederzeit übersteuern kann. Damit kann der Fahrer jederzeit die Verkehrssituation selbst einschätzen und die Verantwortung für sein Fahrzeug übernehmen, indem die automatische Staufolgeführung abgeschaltet wird.

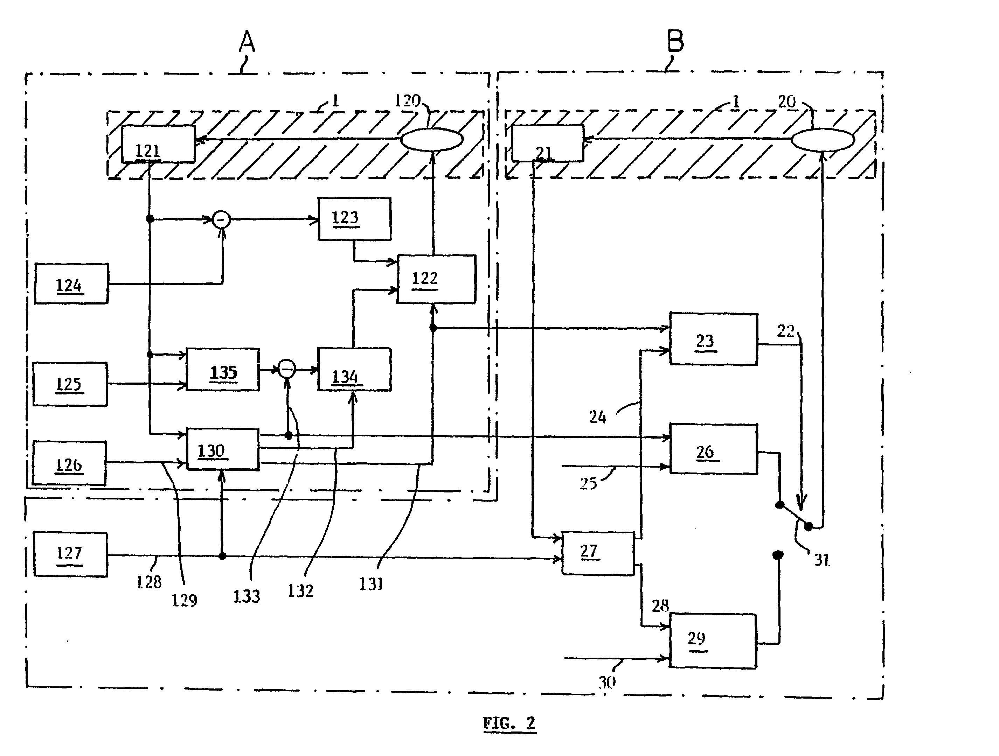

Die in Figur 1 gezeigte hierarchisch gegliederte Funktionsstruktur des erfindungsgemäßen Systems zur automatischen Staufolgeführung wird durch die Figur 2 ergänzend veranschaulicht, die ebenfalls in Form eines Funktionsblockschaltbilds die erfindungsgemäßen Funktionen trennt in die Fahr- und Bremssteuerung bzw. -regelung A (im linken Teil der Figur 2) und die automatische Lenkungssteuerung/Regelung B (im rechten Teil der Figur 2).

### Fahr- und Bremssteuerung bzw. -regelung A mit "Stop" und "Go"-Funktion

Im oberen Teil des Abschnitts A sind die unmittelbar dem Fahrzeug 1 zugeordneten Funktionen der Fahr- und Bremssteuerung bzw. -regelung, nämlich Stellglieder 120 und Sensoren insbesondere ein Sensor 121 zur Erfassung der Fahrzeuggeschwindigkeit eingetragen. Die gemessene Fahrzeuggeschwindigkeit wird zusammen mit einer gesetzten Sollgeschwindigkeit 124 einer Geschwindigkeitsregelung 123 eingegeben, die eine Auswahlfunktion 122 zur Auswahl der Regelungsart beaufschlagt. Weitere Eingangsgrößen der Fahr- und Bremssteuerung bzw. -Regelung A sind ein zeitlicher Abstand zum Führungsfahrzeug 125, von einem Radarsystem 126 erfaßte Fahrzeuge 129 sowie erfaßte Fahrbahnmarkierungen 128, die ein Ergebnis der Auswertung der von einer Videokamera 127 gelieferten Bildrahmen sind. Anhand der erfaßten Fahrbahnmarkierung 128 und der erfaßten Fahrzeuge 129 wählt eine Auswahlfunktion 130 ein geeignetes voranfahrendes Führungsfahrzeug aus (Ausgangsgröße 131). Weitere Ausgangsgrößen der Fahrzeugauswahl 130 sind die Relativgeschwindigkeit 132 sowie die Distanz 133 des voranfahrenden Fahrzeugs zum eigenen Fahrzeug. Die so ermittelte Ist-Distanz 133 wird mit einer aus der eigenen gemessenen Fahrzeuggeschwindigkeit berechneten Solldistanz verknüpft und mit dem Verknüpfungsergebnis eine Distanzregelfunktion 134 beaufschlagt, die außerdem die aus der Auswahlfunktion 130 sich ergebende Relativgeschwindigkeit 132 als Eingangsgröße erhält. In einer Auswahlfunktion 122 wird die Steuerungs- oder Regelbetriebsart der Fahr- und Bremssteuerung bzw. -regelung A ausgewählt, nämlich entweder die Geschwindigkeitsregelung 123 oder die Distanzregelung 134, um damit die Stellglieder 120 anzusteuern

### Automatische Lenkungssteuerung/Regelung B

Diese im rechten Teil der Figur 2 dargestellte automatische Lenkungssteuerung/Regelung B enthält wieder die schraffiert markierte Ebene des Fahrzeugs 1 mit den für die automatische Lenkungssteuerung bzw. Regelung notwendigen dem Fahrzeug zugeordneten Stellgliedern 20 sowie Sensoren 21 zur Erfassung der Ist-Position des Eigenfahrzeugs. Der Regelteil B empfängt als Eingangsgrößen die Information 131 über das erfaßte Führungsfahrzeug, die Ist-Distanz 133 zwischen dem eigenen und dem Führungsfahrzeug sowie die anhand der ausgewerteten Bildrahmen von der Videokamera 127 erfaßten Fahrbahnmarkierungen 128. Aus der von den Sensoren 21 gelieferten Istposition des Eigenfahrzeugs und den aus den Bildrahmen der Videokamera erfaßten Fahrbahnmarkierungen 128 wählt eine Wählfunktion 27 die zur automatischen Lenkungssteuerung bzw. -regelung B geeignete Fahrbahnmarkierung aus. Wenn es sich dabei um eine Fahrbahnmarkierung 24 vor dem eigenen Fahrzeug handelt, beaufschlagt diese Information 24 zusammen mit der aus dem linken Regelungsteil A stammenden Information 131 über das erfaßte voranfahrende Führungsfahrzeug eine Auswahlfunktion 23 zur Auswahl der Regelbetriebsart, die mit einer symbolisch als Umschalter 31 dargestellten Wählfunktion die automatische Lenkungssteuerung bzw. Regelung B zwischen einer Führungsfahrzeug-Folgeregelung 26 und einer Fahrbahnmarkierungs-Folgeregelung 29 auswählt. Dabei erhält die Führungsfahrzeug-Folgeregelung 26 als Eingangsgröße die im Teil A ermittelte Distanz 133 des eigenen Fahrzeugs von dem voranfahrenden Führungsfahrzeug und einen Sollwert 25, während die Fahrbahnmarkierungs-Folgeregelung 29 von der Auswahlfunktion 27 eine Information über eine geeignete ausgewählte Fahrbahnmarkierung 28 sowie einen Sollwert 30 empfängt. Die Stellglieder 20 werden dann entsprechend der von der Wählfunktion 31 gewählten automatischen Lenkungssteuerungs bzw. -regelungsbetriebsart, d. h. entweder entsprechend der Führungsfahrzeug-Folgeregelung 26 oder entsprechend der Fahrbahnmarkierungs-Folgeregelung 29 eingestellt.

Es ist zu erwähnen, dass die in Figur 1 gemäß hierarchischen Gesichtspunkten und in Figur 2 entsprechend den Regelbetriebsarten A und B unterteilten Funktionen von einer entsprechend eingerichteten Steuer/Regeleinheit ausgeführt werden können. Selbstverständlich lassen sich aber die Funktionen auch von separaten Steuer/Regeleinheiten ausführen, deren Programme entsprechend den in Figur 2 gezeigten getrennten Funktionen A und B aufgeteilt sind.

Eine Ausführungsform des erfindungsgemäßen Systems zur automatischen Staufolgeführung eines Kraftfahrzeugs kann folgende Bedienelemente und Anzeigen aufweisen:
- Ein-/Ausschalter,
- gegebenenfalls Tastatur zur Eingabe einer Fahrertypinformation die, wie erwähnt, die automatische Fahrertyperkennung 13 ersetzen oder ergänzen kann;
- Anzeige: "System ist einsatzbereit", d. h. die Einschaltbedingungen sind erfüllt;
- Anzeige: "System ist aktiv";
- Anzeige: "System ist (wird) abgeschaltet".

Die nachfolgende Aufstellung gibt beispielhaft einige Situationen, die darauffolgenden Systemreaktionen sowie Informationen an, die einem Fahrer mitgeteilt werden:
- Hin- und herfahrendes Führungsfahrzeug innerhalb der Fahrspur, d. h. das Führungsfahrzeug führt Ausweichmanöver aus oder hat eine unplausible Fahrweise. Dem Fahrer wird eine entsprechende Information angezeigt. Das System kann hierauf seine Eigeninteiligenz nutzen und nach Hinternissen Ausschau halten und selbst reagieren. Dazu sind geeignete Schwellwerte nötig.
- Fahrspurwechsel des Führungsfahrzeugs mit sofortigem Erkennen eines neuen Führungsfahrzeugs. Dem Fahrer wird darauf eine entsprechende Information erzeugt.
- Einscheren eines Fahrzeugs, wobei das einscherende Fahrzeug ein neues Führungsfahrzeug wird. Dem Fahrer des eigenen Fahrzeugs wird eine entsprechende Information angezeigt. Ein zu knapp einscherendes Fahrzeug macht eine Bremsung z. B. mit mehr als 0,5 g erforderlich. Dazu ermöglicht die automatische Lenkung einen weiteren Freiheitsgrad zum Ausweichen.
- Fahrspurwechsel des Führungsfahrzeugs ohne Erkennen eines neuen Führungsfahrzeugs. Das System wird abgeschaltet und eine entsprechende Abschaltwarnung erzeugt bzw. angezeigt. Bei plötzlichem Spurwechsel des Führungsfahrzeugs, das z. B. einem Hindernis ausweicht, kann die Totzeit verkürzt oder die maximale Verzögerung erhöht werden. Wenn daraufhin ein Objekt oder ein Führungsfahrzeug sicher erkannt wird, kann die maximale Bremsverzögerung von 0,5 g erhöht werden.
- Fahrbahnmarkierung kann nicht mehr erkannt werden, jedoch ist ein Führungsfahrzeug vorhanden. Das System schaltet dann mit Abschaltwarnung ab.
- Stehende Objekte, die keine Fahrzeuge sind, z. B. Warnbaken, Baustellenabschrankungen, verlorene Ladung, befinden sich innerhalb der Fahrspur. Wenn diese Objekte sicher erkannt wurden, kann darauf durch Systemabschaltung mit einer Abschaltwarnung reagiert werden.
- Eine Kreuzung wird durch Fehlen bzw. Aussetzen der Fahrbahnmarkierung erkannt. Das System kann daraufhin mit Abschaltwarnung abschalten.

Als eine Weiterbildung läßt sich in dem System ein Modell der Umgebung bilden und damit der Fahrbahnverlauf vorausberechnen. Damit läßt sich sicherstellen, dass auf größere Abstände der Fahrspurmarkierung, z. B. wenn diese durch Schnee verdeckt sind, oder auch auf versetzt fahrende Führungsfahrzeuge reagiert werden kann.

Durch entsprechende angepaßte Öffnungswinkel der Videokamera und/oder durch mehrere im Abstand angebrachte Videokameras läßt sich eine Erkennung sonst unklarer Situationen sicherstellen.

## Patentansprüche

1. System zur automatischen Folgeführung, insbesondere zur automatischen Staufolgeführung, eines Kraftfahrzeugs, welches
- eine elektronische Fahr-, Brems- und Lenkungssteuerung/Regelung,
- eine mit einer Videokamera und nachgeschalteter Bildauswertung ausgerüstete Umgebungsbilderfassungseinheit, die Signale erzeugt, die der elektronischen Fahr-, Brems- und Lenkungssteuerung zumindest zur automatischen Führung längs einer markierten Fahrspur eingebbar sind, und/oder
- eine Umgebungserfassungseinheit, die aufgrund detektierter Reflexionen von ausgesandter elektromagnetischer Strahlung arbeitet,
- eine Abstands- und Relativgeschwindigkeitserfassungseinheit aufweist, die einen Abstand und eine Relativgeschwindigkeit zu einem aufgrund der von der Umgebungsbilderfassungseinheit und/oder Umgebungserfassungseinheit erzeugten Signale auswählbaren Führungsfahrzeug erfaßt und jeweils ein entsprechendes Abstands- und Relativgeschwindigkeitserfassungssignal erzeugt, und
- Auswahl- und Entscheidungsmittel vorgesehen sind, die aufgrund von von einem Fahrer eingebbaren und/oder von einem Fahrer abhängigen Parametern und aufgrund von vom System automatisch ermittelten Bedingungen
- entscheiden,
- ob eine automatische Folgeführung, insbesondere eine Staufolgeführung, ausführbar ist oder
- ob eine manuelle Fahr-, Brems- und Lenkungssteuerung vom Fahrer auszuführen ist,
- ob nur eine automatische Führung längs einer erkannten markierten Fahrspur oder
- ob eine Folgeführung nach einem erkannten Führungsfahrzeug ausführbar sind, oder
- ob eine Kombination einer Führung längs einer markierten Fahrspur mit einer Folgeführung nach einem Führungsfahrzeug ausführbar ist,
wobei jederzeit eine durch einen Eingriff des Fahrers initiierte manuelle Steuerung priorisiert ist,
- und auswählen,
- welche der Parameter für die Entscheidung automatische oder manuelle Folgeführung, insbesondere Staufolgeführung, zugrunde zu legen sind
- und die, wenn die automatische Folgeführung, insbesondere Staufolgeführung, ausgeführt wird, die Steuerungs- und Regelalgorithmen und -parameter für die automatische Fahr-, Brems- und Lenkungsregelung auswählen.

2. System zur automatischen Folgeführung, insbesondere Staufolgeführung, nach Anspruch 1, **dadurch gekennzeichnet, dass** die Auswahl- und Entscheidungsmittel außerdem eine automatische Anpassung der ausgewählten Parameter an die ermittelten Bedingungen vornehmen.

3. System zur automatischen Folgeführung, insbesondere Staufolgeführung, nach Anspruch 1 oder 2, **dadurch gekennzeichnet, dass** außerdem eine Fahrertyperkennungseinheit vorgesehen ist und dass die Auswahl- und Entscheidungsmittel außerdem eine automatische Anpassung der ausgewählten Parameter und Sollwerte an einen von der Fahrertyperkennungseinheit erkannten Fahrertyp vornehmen.

4. System zur automatischen Folgeführung, insbesondere Staufolgeführung, nach einem der vorangehenden Ansprüche, **dadurch gekennzeichnet, dass** die Auswahl- und Entscheidungsmittel die automatische Folgeführung, insbesondere Staufolgeführung, nur einschalten, wenn die Umgebungsbilderfassungseinheit die markierte Fahrspur erkannt und erfaßt hat, dass das Führungsfahrzeug innerhalb der erfaßten markierten Fahrspur fährt.

5. System zur automatischen Folgeführung, insbesondere Staufolgeführung, nach einem der vorangehenden Ansprüche, **dadurch gekennzeichnet, dass** die Auswahl- und Entscheidungsmittel außerdem die automatische Folgeführung, insbesondere Staufolgeführung, nur einschalten, wenn das Führungsfahrzeug unterhalb einer bestimmten Grenzgeschwindigkeit fährt.

6. System zur automatischen Folgeführung, insbesondere Staufolgeführung, nach einem der vorangehenden Ansprüche, **dadurch gekennzeichnet, dass** die Auswahl- und Entscheidungsmittel außerdem die automatische Folgeführung, insbesondere Staufolgeführung, nur einschalten, wenn der eigene Fahrer nach einem Halt und Wiederanfahren das System aktiviert.

7. System zur automatischen Folgeführung, insbesondere Staufolgeführung, nach einem der vorangehenden Ansprüche, **dadurch gekennzeichnet, dass** die Auswahl- und Entscheidungsmittel die automatische Folgeführung, insbesondere Staufolgeführung, abschalten, wenn das Führungsfahrzeug die markierte Fahrspur verläßt und kein neues Führungsfahrzeug erkannt wird oder schneller als eine bestimmte Grenzgeschwindigkeit fährt.

8. System zur automatischen Folgeführung, insbesondere Staufolgeführung, nach einem der vorangehenden Ansprüche, **dadurch gekennzeichnet, dass** die Auswahl- und Entscheidungsmittel die automatische Folgeführung, insbesondere Staufolgeführung, abschalten, wenn der eigene Fahrer einen Lenkeingriff über ein bestimmtes Lenkmoment und/oder über einen bestimmten Lenkwinkel hinaus vornimmt.

9. System zur automatischen Folgeführung, insbesondere Staufolgeführung, nach einem der vorangehenden Ansprüche, **dadurch gekennzeichnet, dass** die Auswahl- und Entscheidungsmittel die automatische Folgeführung, insbesondere Staufolgeführung, abschalten, wenn der eigene Fahrer einen Fahrpedaleingriff vornimmt.

10. System zur automatischen Folgeführung, insbesondere Staufolgeführung, nach einem der vorangehenden Ansprüche, **dadurch gekennzeichnet, dass** die Auswahl- und Entscheidungsmittel die automatische Folgeführung, insbesondere Staufolgeführung, abschalten, wenn der eigene Fahrer dieselben zwar aktiviert hat, aber die Einschaltbedingungen nicht erfüllt sind.

11. System zur automatischen Folgeführung, insbesondere Staufolgeführung, nach einem der vorangehenden Ansprüche, **dadurch gekennzeichnet, dass** die Auswahl- und Entscheidungsmittel die automatische Folgeführung, insbesondere Staufolgeführung, auf eine entsprechende manuelle Eingabe des eigenen Fahrers abschalten.

12. System zur automatischen Folgeführung, insbesondere Staufolgeführung, nach einem der vorangehenden Ansprüche, **dadurch gekennzeichnet, dass** die Auswahl- und Entscheidungsmittel die automatische Folgeführung, insbesondere Staufolgeführung, abschalten, wenn die Umgebungsbilderfassungseinheit erfasst hat, dass die Fahrspurmarkierung fehlt oder aussetzt.

13. System zur automatischen Folgeführung, insbesondere Staufolgeführung, nach einem der vorangehenden Ansprüche, **dadurch gekennzeichnet, dass** bei jedem Abschalten der automatischen Folgeführung, insbesondere Staufolgeführung, ein entsprechendes Warnsignal für den Fahrer erzeugt wird.

14. System zur automatischen Folgeführung, insbesondere Staufolgeführung, nach einem der vorangehenden Ansprüche, **dadurch gekennzeichnet, dass** die Abstands- und Relativgeschwindigkeitserfassungseinheit ein Radarsystem aufweist.

15. System zur automatischen Folgeführung, insbesondere Staufolgeführung, nach einem der vorangehenden Ansprüche, **dadurch gekennzeichnet, dass** die Umgebungserfassungseinheit mit Radar- (Radio Detection and Ranging) und/oder Lidar- (Light Detection and Ranging) Strahlung arbeitet.

## Claims

1. System for automatic following-distance control, in particular for automatic following-distance control in congestion, of a vehicle, which has
- an electronic driving, braking and steering controller/regulator,
- a unit for registering images of the surroundings, which is equipped with a video camera and downstream image evaluation means and which generates signals which can be input into the electronic driving, braking and steering controller at least for the automatic control along a marked lane, and/or
- a unit for registering the surroundings, which operates on the basis of detected reflections of emitted electromagnetic radiation,
- a unit for registering the distance between vehicles and relative velocity, which registers a distance from, and a relative velocity with respect to, a vehicle in front, which can be selected on the basis of the signals generated by the unit for registering images of the surroundings and/or unit for registering the surroundings, and in each generates a corresponding distance- and relative velocity-registering signal, and
- selection and decision means are provided which, on the basis of parameters which can be input by a driver and/or are dependent on a driver on the basis of conditions automatically determined by the system,
- decide
- whether it is possible to execute automatic following-distance control, in particular following-distance control in congestion, or
- whether manual driving, braking and steering control is to be carried out by the driver,
- whether only automatic control along a detected marked lane can be executed, or
- whether following-distance control in accordance with a detected vehicle in front can be executed, or
- whether a combination of control along a marked lane with following-distance control in accordance with a vehicle in front can be executed,
manual control initiated by an intervention of the driver being prioritized at any time,
- and decide
- which of the parameters for the decision combines an automatic or manual following-distance control, in particular following-distance control in congestion, are to be used as the basis,
- and which select the control and regulating algorithms and parameters for the automatic driving, braking and steering control when the automatic following-distance control, in particular following-distance control in congestion, is being executed.

2. System for automatic following-distance control, in particular following-distance control in congestion, according to Claim 1, **characterized in that** the selection and decision means also perform automatic adaptation of the selected parameters to the determined conditions.

3. System for automatic following-distance control, in particular following-distance control in congestion, according to Claim 1 or 2, **characterized in that** a driver-type-detection unit is also provided, and **in that** the selection and decision means also perform automatic adaptation of the selected parameters and setpoint values to a driver type detected by the driver-type-detection unit.

4. System for automatic following-distance control, in particular following-distance control in congestion, according to one of the preceding claims, **characterized in that** the selection and decision means switch on the automatic following-distance control, in particular following-distance control in congestion, only if the unit which registers images of the surroundings has detected the marked lane and registered that the vehicle in front is travelling within the registered marked lane.

5. System for automatic following-distance control, in particular following-distance control in congestion, according to one of the preceding claims, **characterized in that** the selection and decision means also switch on the automatic following-distance control, in particular following-distance control in congestion, if the vehicle in front is travelling below a specific limiting velocity.

6. System for automatic following-distance control, in particular following-distance control in congestion, according to one of the preceding claims, **characterized in that** the selection and decision means also switch on the automatic following-distance control, in particular following-distance control in congestion, if the driver of the vehicle in question activates the system after stopping and restarting.

7. System for automatic following-distance control, in particular following-distance control in congestion, according to one of the preceding claims, **characterized in that** the selection and decision means switch off the automatic following-distance control, in particular following-distance control in congestion, if the vehicle in front leaves the marked lane and no new vehicle in front is detected or is travelling faster than a specific limiting velocity.

8. System for automatic following-distance control, in particular following-distance control in congestion, according to one of the preceding claims, **characterized in that** the selection and decision means switch off the automatic following-distance control, in particular following-distance control in congestion, if the driver of the vehicle in question performs a steering intervention with more than a specific steering torque and/or beyond a specific steering angle.

9. System for automatic following-distance control, in particular following-distance control in congestion, according to one of the preceding claims, **characterized in that** the selection and decision means switch off the automatic following-distance control, in particular following-distance control in congestion, if the driver of the vehicle in question performs an accelerator pedal intervention.

10. System for automatic following-distance control, in particular following-distance control in congestion, according to one of the preceding claims, **characterized in that** the selection and decision means switch off the automatic following-distance control, in particular following-distance congestion control if the driver of the vehicle in question has activated said means but the switch-on conditions are not met.

11. System for automatic following-distance control, in particular following-distance control in congestion, according to one of the preceding claims, **characterized in that** the selection and decision means switch off the automatic following-distance control, in particular following-distance control in congestion, in response to a corresponding manual input by the driver of the vehicle in question.

12. System for automatic following-distance control, in particular following-distance control in congestion, according to one of the preceding claims, **characterized in that** the selection and decision means switch off the automatic following-distance control, in particular following-distance control in congestion, if the unit registering images of the surroundings has registered that the lane marking is missing or has been removed.

13. System for automatic following-distance control, in particular following-distance control in congestion, according to one of the preceding claims, **characterized in that** whenever the automatic following-distance control, in particular following-distance control in congestion is switched off, a corresponding warning signal for the driver is generated.

14. System for automatic following-distance control, in particular following-distance control in congestion, according to one of the preceding claims, **characterized in that** the unit for registering distance between vehicles and relative velocity has a radar system.

15. System for automatic following-distance control, in particular following-distance control in congestion, according to one of the preceding claims, **characterized in that** the unit for registering the surroundings operates with radar (radio detection and ranging) and/or lidar (light detection and ranging) radiation.

## Revendications

1. Système de conduite de suivi automatique, en particulier de conduite de suivi automatique en embouteillage pour un véhicule automobile, comportant:
- une commande/régulation électronique de conduite, de freinage et de direction,
- une unité de saisie des images de l'environnement équipée d'une caméra vidéo avec en aval un système d'exploitation d'images, et générant des signaux fournis à la commande électronique de conduite, de freinage et de direction, au moins pour une conduite automatique le long d'un marquage de voie, et/ou
- une unité de saisie de l'environnement qui traite les signaux réfléchis détectés de rayonnements électromagnétiques émis, ainsi qu'
- une unité de saisie de distance et de vitesse relative, qui saisit une distance et une vitesse relative par rapport à un véhicule guide sélectionné à partir des signaux de l'unité de saisie des images de l'environnement et/ou de l'unité de saisie de l'environnement et génère chaque fois un signal correspondant de distance ou de vitesse relative, et comportant en outre
• des moyens de sélection et de décision qui, à partir des paramètres introduits par le conducteur et/ou dépendants du conducteur et à partir de conditions déterminées automatiquement par le système,
- décident si on doit effectuer :
• une combinaison d'un guidage le long d'une voie munie d'un marquage et d'une conduite de suivi d'un véhicule guide,
• une conduite de suivi automatique en particulier une conduite de suivi automatique en embouteillage, ou
• une commande manuelle de conduite, de freinage et de direction par le conducteur, ou
• seulement un guidage automatique le long d'une voie munie de marquages, reconnus, ou
• une conduite de suivi d'un véhicule guide détecté ou
• alors qu'à tout instant une commande manuelle initialisée par une intervention du conducteur est prioritaire,
- qui sélectionnent :
• les paramètres à la base de la décision de la conduite de suivi automatique ou manuelle, en particulier de la conduite de suivi en embouteillage. et
• si on passe en conduite de suivi automatique, en particulier de conduite de suivi en embouteillage, les algorithmes de commande et de régulation et les paramètres à sélectionner pour la régulation automatique de conduite, de freinage et de direction.

2. Système de conduite de suivi automatique, notamment de conduite de suivi en embouteillage selon la revendication 1,
**caractérisé en ce que**
les moyens de sélection et de décision effectuent en outre une adaptation automatique des paramètres sélectionnés aux conditions déterminées.

3. Système de conduite de suivi automatique, notamment de conduite de suivi en embouteillage selon l'une quelconque des revendications 1 ou 2,
**caractérisé en ce qu'**
en outre il est prévu une unité de reconnaissance de type de conducteur et les moyens de sélection et de décision effectuent en outre une adaptation automatique des paramètres et des valeurs de consigne sélectionnés suivant le type de conducteur reconnu par l'unité de reconnaissance.

4. Système de conduite de suivi automatique, notamment de conduite de suivi en embouteillage selon l'une quelconque des revendications précédentes,
**caractérisé en ce que**
les moyens de sélection et de décision ne mettent en marche la conduite de suivi automatique, en particulier la conduite de suivi automatique en embouteillage, que seulement si l'unité de saisie des images de l'environnement a reconnu le marquage de voie et a détecté que le véhicule guide se déplaçait dans la voie munie du marquage tel que saisi.

5. Système de conduite de suivi automatique, notamment de conduite de suivi en embouteillage selon l'une quelconque des revendications précédentes,
**caractérisé en ce que**
les moyens de sélection et de décision ne mettent en marche en outre la conduite de suivi automatique, en particulier la conduite de suivi automatique en embouteillage, que seulement si le véhicule guide circule en dessous d'une certaine vitesse limite.

6. Système de conduite de suivi automatique, notamment de conduite de suivi en embouteillage selon l'une quelconque des revendications précédentes,
**caractérisé en ce que**
les moyens de sélection et de décision ne mettent en marche la conduite de suivi automatique en particulier la conduite de suivi automatique en embouteillage, que seulement si le propre conducteur a activé le système après un arrêt et un redémarrage.

7. Système de conduite de suivi automatique, notamment de conduite de suivi en embouteillage selon l'une quelconque des revendications précédentes,
**caractérisé en ce que**
les moyens de sélection et de décision coupent la conduite de suivi automatique notamment la conduite de suivi automatique en embouteillage, si le véhicule guide quitte la voie munie du marquage et qu'aucun nouveau véhicule guide n'est reconnu, ou si le véhicule circule au-delà de la vitesse limite définie.

8. Système de conduite de suivi automatique, notamment de conduite de suivi en embouteillage selon l'une quelconque des revendications précédentes,
**caractérisé en ce que**
les moyens de sélection et de décision coupent la conduite de suivi automatique notamment la conduite de suivi automatique en embouteillage, si le propre conducteur intervient sur la direction avec un certain couple et/ou s'il dépasse un certain angle de commande de direction.

9. Système de conduite de suivi automatique, notamment de conduite de suivi en embouteillage selon l'une quelconque des revendications précédentes,
**caractérisé en ce que**
les moyens de sélection et de décision coupent la conduite de suivi automatique notamment la conduite de suivi automatique en embouteillage si le propre conducteur intervient sur la pédale d'accélérateur.

10. Système de conduite de suivi automatique, notamment de conduite de suivi en embouteillage selon l'une quelconque des revendications précédentes,
**caractérise en ce que**
les moyens de sélection et de décision coupent la conduite de suivi automatique notamment la conduite de suivi automatique en embouteillage si le propre conducteur a certes activé ce mode de fonctionnement mais n'a pas rempli les conditions de mise en marche.

11. Système de conduite de suivi automatique, notamment de conduite de suivi en embouteillage selon l'une quelconque des revendications précédentes.
**caractérisé en ce que**
les moyens de sélection et de décision coupent la conduite de suivi automatique notamment la conduite de suivi automatique en embouteillage lorsqu'il y a une intervention manuelle du propre conducteur.

12. Système de conduite de suivi automatique, notamment de conduite de suivi en embouteillage selon l'une quelconque des revendications précédentes,
**caractérisé en ce que**
les moyens de sélection et de décision coupent la conduite de suivi automatique notamment la conduite de suivi automatique en embouteillage si l'unité de saisie d'image de l'environnement a constaté qu'il n'y a pas de marquage de voie ou si le marquage est arrêté.

13. Système de conduite de suivi automatique, notamment de conduite de suivi en embouteillage selon l'une quelconque des revendications précédentes,
**caractérisé en ce qu'**
à chaque coupure de la conduite de suivi automatique en particulier de la conduite de suivi automatique en embouteillage, le système génère un signal avertisseur correspondant pour le conducteur.

14. Système de conduite de suivi automatique, notamment de conduite de suivi en embouteillage selon l'une quelconque des revendications précédentes,
**caractérisé en ce que**
l'unité de saisie de distance et de vitesse relative comporte un système radar.

15. Système de conduite de suivi automatique, notamment de conduite de suivi en embouteillage selon l'une quelconque des revendications précédentes,
**caractérisé en ce que**
l'unité de saisie de l'environnement utilise un radar et/ou un Lidar (système de détection optique).
